# EUROPEAN PATENT SPECIFICATION

(11) **EP 2 186 599 B1**
(45) Date of publication and mention of the grant of the patent: **03.08.2011**
(21) Application number: 09176186.6
(22) Date of filing: 17.11.2009
(51) Int. Cl.: B23Q 11/00

(54) **Apparatus for removing machining chips**
Vorrichtung zum Entfernen von Bearbeitungsspänen
Appareil pour retirer les puces d'usinage

(30) Priority: 18.11.2008 IT MO20080296
(43) Date of publication of application: 19.05.2010
(73) Proprietor: SCM Group S.p.A., 47900 Rimini (IT)
(72) Inventor: Dal Santo, Luca, 36030 Caltrano (VI) (IT)
(74) Representative: Cicconetti, Andrea

(56) References cited:
- EP-A- 0 795 266
- DE-A1- 2 261 297
- DE-C- 766 255
- DE-C1- 19 720 582
- GB-A- 412 890
- GB-A- 861 749
- IT-A1- MO20 070 245

## Description

The invention relates to an apparatus for removing machining chips made of plastics or similar materials from a machine tool and an edgebanding machine comprising this apparatus. In particular, the invention relates to an apparatus for removing machining chips made of plastics or similar materials from edgebanding machines used in the woodworking industry for edgebanding panels made of wood or similar materials.

The aforesaid edgebanding machines are used, in particular, for applying, and subsequently machining by chip-forming, edges made of plastics or similar materials on a panel made of wood or similar materials.

These edgebanding machines comprise a frame supporting a movement line extending along an advancement direction of the panel.

The frame supports a plurality of machining stations including an edgebanding station and a finishing station. The edgebanding station comprises an edgebanding unit arranged for applying to each side of the panel, by gluing, an edge made of plastics.

This edge has dimensions that are greater than a thickness of the panel, i.e. it so as to cover completely the thickness of the panel.

The finishing station, positioned downstream of the edgebanding station with respect to the advancement direction, comprises a plurality of substations, each of which is provided with a cutting unit.

Each cutting unit comprises respective cutting tools for performing on these edges chip-forming machinings.

More precisely, these cutting units comprise a trimming unit, a cornering unit, a rounding/profiling unit and an edge-scraping unit.

The trimming unit removes an upper part and a lower part of the edge that exceeds the thickness of the panel, the cornering unit makes a connecting radius between the edge applied onto the thickness of the panel and the upper and lower surface of the panel, the rounding/profiling unit rounds the vertical profile of the edge.

After the machinings performed by the trimming unit, by the cornering unit and by the rounding/profiling unit, the machined surface of the edge is not smooth, but has a plurality of typically longitudinal displeasing surface irregularities that are due to the pitch of the cutting edges of the milling cutters used by the aforesaid cutting units.

The aforesaid edge-scraping unit uses a scraper to remove these irregularities along the entire length of the edge, which produces a chip having the shape of a long, thin and corrugated thread.

This chip adheres, in addition to the panels being machined, also to the cutting tools, or to the milling cutters and to the scraper and to parts of the edgebanding machine adjacent to the cutting tools, and may cause faults in the edgebanding machine, such as, for example, jams, which may cause frequent downtime as well as a worsening of the aesthetic appearance of the machining.

For this reason an apparatus for removing the machining chip is fixed to the edge-scraping unit.

Apparatuses are known for removing machining chips from an edgebanding machine comprising a suction conduit.

The suction conduit is fixed to the edge-scraping unit and sucks and removes the machining chip.

In particular, the suction conduit comprises an inlet and an outlet for this chip, the inlet being positioned near the aforesaid scraper and the outlet being connected to a device arranged for making a vacuum between the inlet and the outlet.

A drawback of the aforesaid apparatuses is that they are not very effective.

In fact, these apparatuses cause frequent edgebanding machine downtime with a consequent reduction in the productivity of the edgebanding machine.

This is due to the fact that, as said above, the machining chip, having the shape of a long, thin and corrugated thread, easily tends to get caught on the inlet and inside the suction conduit.

In fact, in use, after a first thread has got caught on the inlet of or in the suction conduit, the subsequent threads tend to stick to the first thread until in a short time they form a skein so as to obstruct the suction conduit. Consequently, frequent downtime and maintenance interventions are necessary to remove this skein from the suction conduit.

Sometimes, in order to remedy this drawback, the sucking power of the device for creating the vacuum, or the diameter of the suction conduit, has been increased.

Nevertheless, this, in addition to not overcoming the aforesaid drawback, entails an increase in the costs to be sustained to operate and make this apparatus and entails increasing the overall dimensions of the apparatus. DE634784 discloses a cylinder-boring machine having a housing for a boring-bar adapted to be secured in position for operation on a cylinder and suction means for conveying cuttings away from the cylinder through the upper end thereof. The boring-spindle is carried in a bearing in the housing and is driven by belt means from a countershaft which is connected through the gear box to an electric motor. A fan secured to the upper end of the motor spindle, draws the cuttings as they are produced, from the tools along the passage in the housing, to an outlet.

An object of the invention is to improve the apparatuses for removing machining chips made of plastics or similar materials from a machine tool, in particular from an edgebanding machine.

A further object is to provide more effective apparatuses than known apparatuses.

In a first aspect of the invention an apparatus is provided for removing machining chips made of plastics or similar materials as defined in claim 1.

Owing to this aspect of the invention it is possible to make an apparatus for removing machining chips that is more effective than known devices.

In fact, the cutting means, for example positioned near said inlet, intercepts the chips and shreds the chips, reducing the chips into small parts that cannot get caught in, and are more easily suckable from, the suction conduit means.

In a second aspect of the invention an edgebanding machine is provided for edgebanding panels made of wood or similar materials comprising an apparatus as disclosed in claim 1. The invention can be better understood and implemented with reference to the attached drawings that illustrate some embodiments thereof by way of non-limiting example, in which:
Figure 1 is a schematic and fragmentary plan view of an apparatus for removing machining chips according to the invention;
Figure 2 is a schematic perspective view, with some details removed, and partially sectioned, of the apparatus in Figure 1 in an operating configuration;
Figure 3 is an exploded view of a cutting device included in the apparatus in Figure 1;
Figure 4 is a schematic frontal view of the cutting device in Figure 3;
Figure 5 is a schematic rear view of the cutting device in Figure 3;
Figure 6 is a schematic section of the cutting device in Figure 3;
Figure 7 is a further schematic section, with some details removed, of the cutting device in Figure 3.

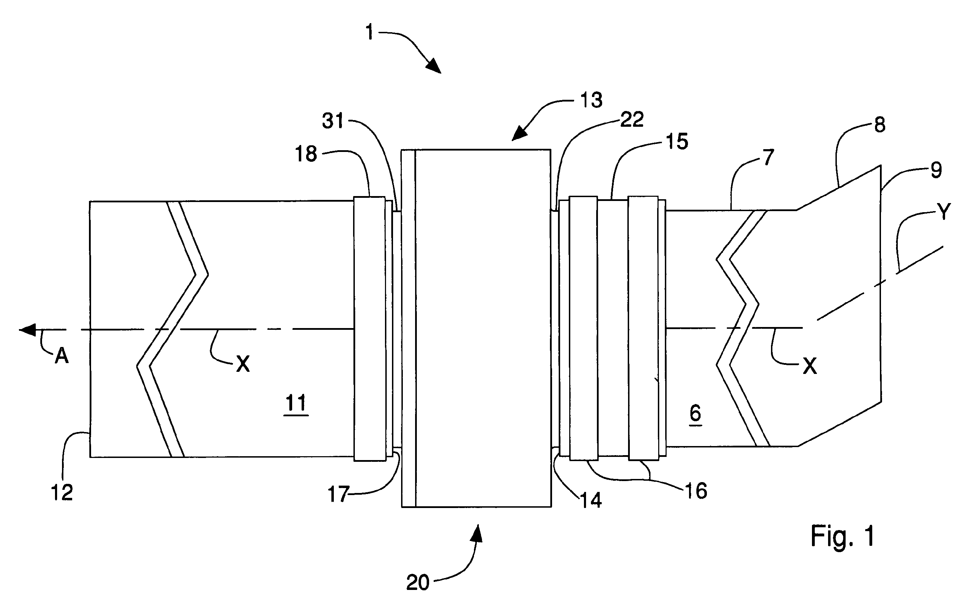

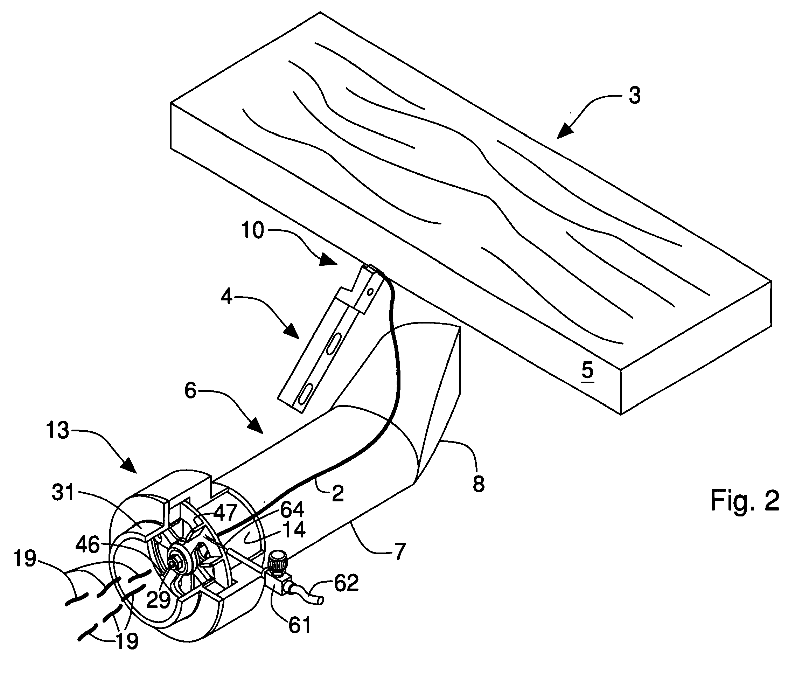

With reference to Figures 1 and 2 there is shown an apparatus 1 for removing a machining chip 2 made of plastics or similar materials from a machine tool, which is not shown, in particular from an edgebanding machine used in the woodworking industry for edgebanding a panel 3 made of made of wood or similar materials.

The apparatus 1 is fixed, through means that is not shown, to a cutting unit of the machine tool, in particular to an edge-scraping unit, of which a cutting tool 4, or scraper, is shown.

The cutting tool 4 is arranged for machining, in particular finishing, by removing chips, an edge 5, for example an edge made of plastics previously applied onto the panel 3.

The apparatus 1 comprises a tubular suction hood 6 for sucking the chips 2.

The suction hood 6 comprises a first portion 7, having for example a hollow cylindrical shape, extending substantially parallel to a first axis X, the first axis X extending substantially parallel to a suction direction A of the chips 2 (Figure 1).

In an embodiment of the invention, which is not shown, the first portion 7 has the shape of a hollow parallelepipedon with a rectangular or square base.

The suction hood 6 further comprises a second portion 8, connected to the first portion 7 and positioned upstream of the first portion 7 with respect to the aforesaid suction direction A.

The second portion 8, which in use is nearer the edge 5 than the first portion 7, extends substantially parallel to a second axis Y that is transverse to the first axis X. Further, the second portion 8 comprises an inlet 9 for the chip 2.

In particular, the inlet 9 is positioned, in use, near and facing a machining zone 10 of the cutting tool 4.

The apparatus 1 further comprises a suction conduit 11 (shown schematically in Figure 1), positioned downstream of the suction hood 6, and provided with an outlet 12 for the chip 2.

In particular, the suction conduit 11 is connectable to a device, which is not shown, arranged for making a vacuum between the inlet 9 and the outlet 12.

The apparatus 1 further comprises a cutting device 13 for cutting, in particular shredding, inside the suction hood 6 and the suction conduit 11, the chips 2 into parts 19 of reduced dimensions.

The cutting device 13 is interposed, in use, between the suction hood 6 and the suction conduit 11, i.e. between the inlet 9 and the outlet 12.

More precisely, the cutting device 13 is connected, on one side, to a further outlet 14 of the suction hood 6 for the chip 2, and on an opposite side, to a further inlet 17 of the suction conduit 11 for the chip 2.

In particular, the cutting device 13 is connected to the suction hood 6 by a hose 15 and is fixed to the hose 15 by hose clamps 16.

Further, the cutting device 13 is inserted partially into the suction conduit 11 and is fixed to the suction conduit 11 by a further hose clamp 18.

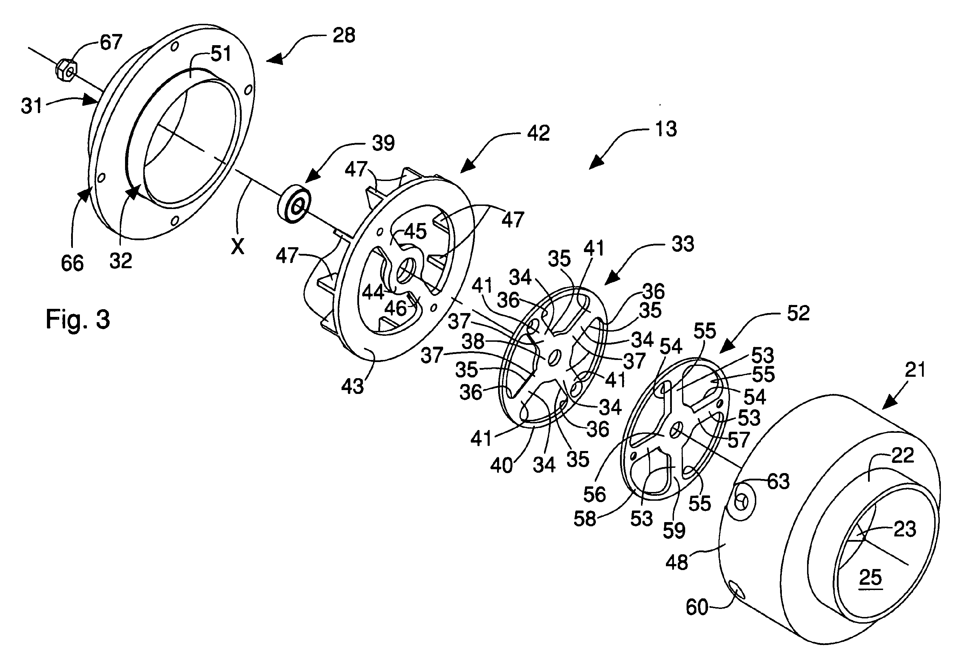

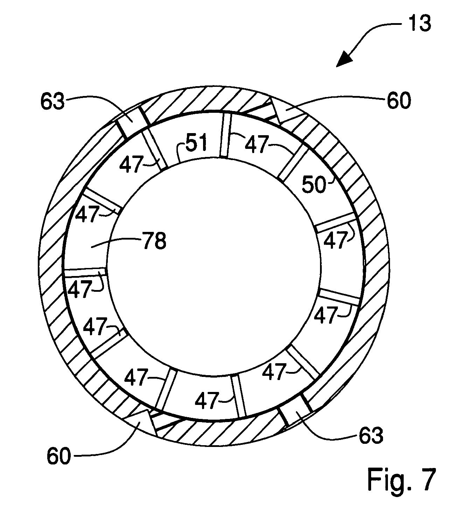

The cutting device 13 is disclosed in greater detail with reference to Figures 3 to 7.

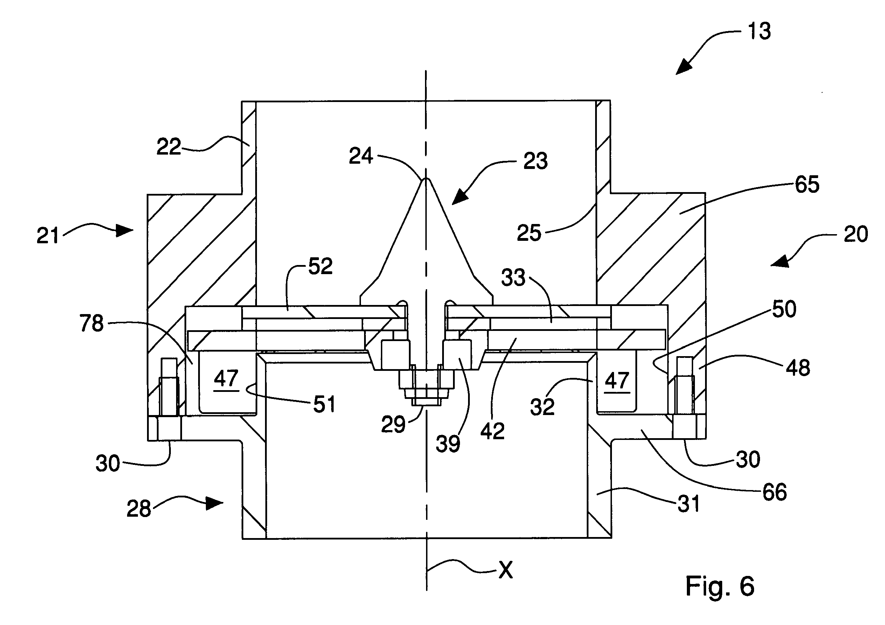

The cutting device 13 comprises a case 20 having, for example, substantially a hollow cylindrical shape (Figure 6).

In particular, the case 20 is arranged for housing cutting means 33, further cutting means 52 and a rotor element 42, disclosed below, of the cutting device 13 (Figure 3).

The case 20 comprises a first part 21 provided with a first base portion 65, having a substantially ring shape, from which a first circular ridge 22 protrudes that is arranged, in use, for facing the suction hood 6 and being enveloped, at least partially, by the hose 15.

To the first part 21 a conveying element 23 is further connected, for example a cone-shaped conveying element, arranged for conveying the chips 2 inside the cutting device 13 to the cutting means 33 and the further cutting means 52. In particular, the conveying element 23 extends substantially parallel to the first axis X and comprises a more narrow end 24, in particular a sharpened end, facing, in use, the further outlet 14 of the suction hood 6.

The conveying element 23 further comprises a supporting shaft 29, the function of which will be explained below, extending substantially parallel to the first axis X on the opposite side to the end 24.

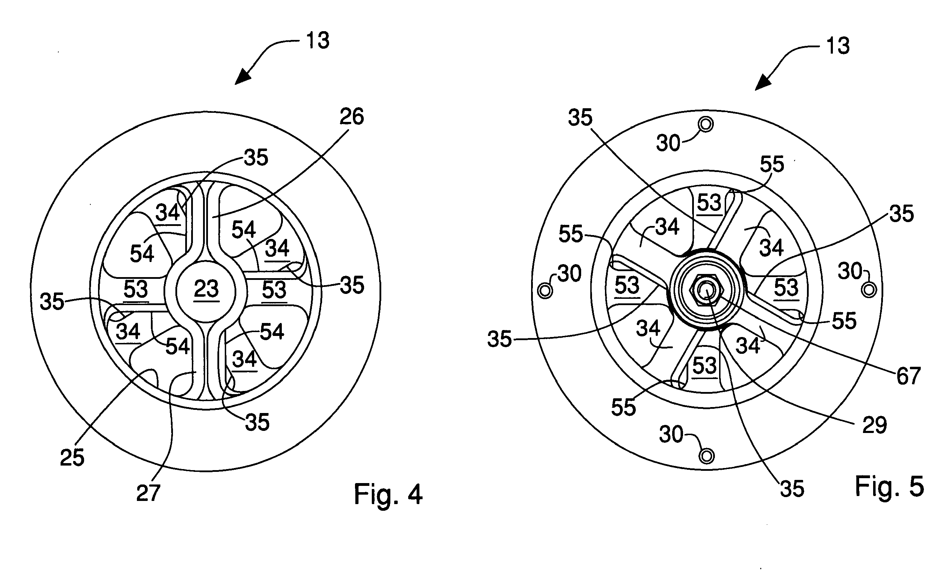

The conveying element 23 is fixed to a first substantially cylindrical internal wall 25 of the first part 21 by a first supporting arm 26 and a second supporting arm 27 extending substantially radially with respect to the first axis X (Figure 4).

In particular, the first supporting arm 26 and the second supporting arm 26 are positioned on opposite sides of the conveying element 23.

Further, the first supporting arm 26 and the second supporting arm 27 are tapered, i.e. have a decreasing thickness, in the direction of the further outlet 14, such they as well contribute to conveying the chips 2 inside the cutting device 13 in a more effective manner.

Further, from the first base portion 65, opposite the first circular ridge 22, a second circular ridge 48 protrudes comprising a second substantially cylindrical internal wall 50.

In particular, the second internal wall 50 is substantially concentric to the first internal wall 25 and has a greater diameter than the first internal wall 25.

The case 20 further comprises a second part 28, which is fixable to the first part 21 for example by screws 30 (Figure 5).

The second part 28 comprises a second base portion 66, having a substantially ring shape, from which a third circular ridge 31 protrudes, having for example a greater thickness than the first circular ridge 22, arranged, in use, to be inserted, at least partially, into the suction conduit 11 through the further inlet 17.

The second part 28 further comprises a fourth circular ridge 32, projecting from the second base wall 66 on the opposite side of the second circular ridge 31.

In particular, the fourth circular ridge 32 protrudes, in use, inside the first part 21 and comprises an outer wall 51 that is substantially cylindrical and concentric to the second internal wall 50 of the first part 21.

The cutting device 13 comprises, as mentioned above, cutting means 33 that is rotatable around the first axis X (figure 3).

The cutting means 33 comprises first cutting elements 34 that are angularly spaced apart from one another.

In particular, in the example shown, there are provided four first cutting elements 34 that are angularly spaced apart from one another by an angle that is substantially the same as 90°.

The first cutting elements 34 are substantially rectilinear and extend substantially radially with respect to the first axis X.

The first cutting elements 34 each comprise a first rectilinear cutting profile 35 and a first curvilinear cutting profile 36.

In particular, the first rectilinear cutting profile 35 and the first curvilinear cutting profile 36 are positioned downstream with respect to a rotating direction of the cutting means 33.

In an embodiment of the invention, which is not shown, the first cutting elements are fewer than four in number.

In a further embodiment of the invention, which is not shown, the first cutting elements are greater than four in number.

In another embodiment of the invention, which is not shown, each of the first cutting elements comprises a first rectilinear blade or a first curvilinear blade.

In another further embodiment of the invention, which is not shown, the first cutting elements are substantially curvilinear and comprise a portion extending substantially radially with respect to the first axis X.

Further, the cutting means 33 comprises a first hub element 38 that is rotatably supported by the aforesaid supporting shaft 29.

In particular, first ends 37 of the first cutting elements 34 nearer the first axis X are connected to the first hub element 38.

The cutting means 33 further comprises a first annulus element 40, that is substantially concentric to the first hub element 38.

In particular, further first ends 41, which are opposite the aforesaid first ends 37, of the first cutting elements 34 that are further from the first axis X are connected to the first annulus element 40.

The cutting device 13 comprises, as mentioned above, a rotor element 42 arranged for rotating the cutting means 33 around the first axis X, as will be better disclosed below.

The rotor element 42 includes a hub element 44 that is rotatably supported by the aforesaid supporting shaft 29, between the hub element 44 and the supporting shaft 29 there being interposed a bearing element 39.

The rotor element 42 further comprises an annulus element 43 connected to the hub element 44 by a third supporting arm 45 and a fourth supporting arm 46 extending substantially radially with respect to the first axis X.

In particular, the third supporting arm 45 and the fourth supporting arm 46 are positioned on opposite sides of the first axis X.

In use, the cutting means 33 is connected to the rotor element 42 by a threaded connection, which is not shown, such that the third supporting arm 45 and the fourth supporting arm 46 each face a respective first cutting element 34.

The rotor element 42 further comprises a plurality of blades 47 projecting from the annulus element 43 along the suction direction A on a side opposite the cutting means 33.

The blades 47 extend radially with respect to the first axis X and are housed, in use, in a chamber 78, for example of a substantially annular shape, defined between the second internal wall 50 of the first part 21 and the outer wall 51 of the second part 28.

The cutting device 13 further comprises, as mentioned above, further cutting means 52 cooperating with the cutting means 33 for cutting the chips 2.

The further cutting means 52 faces the cutting means 33.

In particular, the further cutting means 52 is positioned upstream of the cutting means 33 with respect to the suction direction A.

In this manner, in use, the cutting means 33 is interposed between the further cutting means 52 and the rotor element 42.

The further cutting means 52 comprises second cutting elements 53 that are angularly spaced apart from one another.

In particular, in the example shown, four second cutting elements 53 are provided that are angularly spaced apart from one another by an angle that is substantially the same as 90°.

The second cutting elements 53 are substantially rectilinear and extend substantially radially with respect to the first axis X.

The second cutting elements 53 each comprise a second rectilinear cutting profile 54 and a second curvilinear cutting profile 55.

The second rectilinear cutting profiles 54 and the second curvilinear cutting profiles 55 cooperate, in use, with the first rectilinear cutting profiles 35 and with the second curvilinear cutting profiles 36 for cutting the chips 2.

In particular, this occurs, in use, owing to the fact that the first rectilinear cutting profiles 35 and the second curvilinear cutting profiles 36 cross, through the effect of their rotation around the first axis X, the second rectilinear cutting profiles 54 and the second curvilinear cutting profiles 55.

In an embodiment of the invention, which is not shown, the second cutting elements are fewer than four in number.

In a further embodiment of the invention, which is not shown, the second cutting elements are greater than four in number.

In another embodiment of the invention, which is not shown, each of the second cutting elements comprises a second rectilinear blade or a second curvilinear blade.

In another further embodiment of the invention, which is not shown, the second cutting elements are substantially curvilinear and comprise a portion extending substantially radially with respect to the first axis X.

The further cutting means 52 further comprises a second hub element 56 supported by the aforesaid supporting shaft 29. In particular, second ends 57 of the second cutting elements 53 nearer the first axis X are connected to the second hub element 56.

The further cutting means 52 further comprises a second annulus element 58, that is substantially concentric to the second hub element 56.

In particular, further second ends 59, which are opposite the aforesaid second ends 57, of the second cutting elements 53 that are further from the first axis X are connected to the second annulus element 58.

In use, the further cutting means 52 is connected to the first supporting arm 26 and to the second supporting arm 27 of the first part 21 of the case 20 by a threaded connection, which is not shown, such that the first supporting arm 26 and the second supporting arm 27 each face a respective second cutting element 53.

In this manner, in use, the further cutting means 52 is fixed, i.e. does not rotate, with respect to the first axis X.

In an embodiment of the invention, which is not shown, the further cutting means 52 are rotatable, for example in an opposite direction to the cutting means 33.

The cutting device 13 further comprises a locking element 67, in particular a nut, that is connectable to a threaded portion of the supporting shaft 29 for locking on the supporting shaft 29, with respect to the suction direction A, the cutting means 33, the further cutting means 52 and the rotor element 42.

The cutting device 13 further comprises first holes 60 obtained in the first part 21 of the case 20.

The first holes 60, for example two and diametrically opposite, connect the chamber 78 to the external environment, the first holes 60 extending transversely to the first axis X.

In particular, the first holes 60 are arranged substantially tangentially to the chamber 78.

In the first holes 60 respective connections 61 (Figure 2) are insertible that are connectable to a source of pressurised fluid 64, in particular air, via pipes 62, the first holes 60 enabling the pressurised fluid 64 to flow inside the chamber 78.

This pressurised fluid 64, or operating fluid, is arranged, in use, to act on the blades 47 to rotate the rotor element 42 and the cutting means 33 therewith.

Owing to the two first holes 60 it is possible to reduce the time required to take the rotor element 42 to a rotation speed that is sufficient for performing the cut.

In an embodiment of the invention, which is not shown, more than two first holes 60 are provided.

In a further embodiment of the invention, which is not shown, a single first hole 60 is provided.

The cutting device 13 further comprises second holes 63 which are also obtained in the first part 21 of the case 20 and are arranged for exiting the pressurised fluid 64 from the chamber 78.

The second holes 63, for example two in number and diametrically opposite, connect the chamber 78 to the external environment.

In particular, the second holes 63 extend radially with respect to the first axis X and are angularly spaced apart from the first holes 60.

Respective silencers that are not shown are connectable to the second holes 63 to reduce the noise produced by the pressurised fluid 64 exiting the chamber 78.

In an embodiment of the invention, which is not shown, more than two second holes 63 are provided.

In a further embodiment of the invention, which is not shown, a single second hole 63 is provided.

In operation, the fluid 64, suitably dispensed from the aforesaid source, acts on the blades 47 of the rotor element 42 rotating the rotor element 42 around the first axis X. The cutting means 33, as mentioned above, is fixed to the rotor element 42, thus the cutting means 33 is in turn rotated.

The cutting means 33 cooperate, as mentioned above, with the further cutting means 52, which is fixed with respect to the first axis X or rotate in the opposite direction to the cutting means 33, to cut the chips 2.

In use, the cutting device 13 is driven only when there are chips 2 to be cut, and otherwise remains resting, which enables less fluid 64 to be consumed and the mechanical parts of the cutting device 13 to become less worn.

Further, it should be noted how the apparatus 1 removes the chips 2 in a more effective manner than known apparatuses.

In fact, the cutting means 33, cooperating with the further cutting means 52, intercepts the chip 2, which has been suitably conveyed by the conveying element 23, and shreds the chip 2, reducing the chip 2 into small parts 19 that are not catchable in and are more easily suckable from the suction hood 6.

In an embodiment of the invention, which is not shown, an electric motor is provided, for example supported by the case 20, to rotate the cutting means 33.

In this embodiment, a motor shaft of the electric motor engages a gear obtained in the annulus element 43 of the rotor element 42, the rotor element 42 being devoid, in this embodiment, of the blades 47.

In a version of the aforesaid embodiment, which is not shown, the aforesaid gear is obtained in the first annulus element 40 of the cutting means 33, in this version the apparatus 1 being devoid of the rotor element 42. Naturally, in this embodiment, as they are not necessary, there are no first holes 60 and second holes 63 in the case 20.

## Claims

1. Apparatus (1) for removing machining chips (2) made of plastics or similar materials, comprising suction conduit means (6, 11) including an inlet (9) and an outlet (12) for said chips (2) and arranged for sucking said chips (2) between said inlet (9) and said outlet (12) along a suction direction (A), wherein there is provided a cutting device (13) for cutting said chips (2) interposed between said inlet (9) and said outlet (12), said cutting device (13) comprising, and rotatably supporting around a rotation axis (X) substantially parallel to said suction direction (A), cutting means (33), ***characterized in that*** said cutting device (13) comprises further cutting means (52) cooperating with said cutting means (33) for cutting said chips (2).

2. Apparatus (1) according to claim 1, wherein said further cutting means (52) is fixed with respect to said rotation axis (X).

3. Apparatus (1) according to claim 1, or 2, wherein said further cutting means (52) faces said cutting means (33).

4. Apparatus (1) according to any preceding claim, wherein said cutting means (33) and said further cutting means (52) each comprise a plurality of cutting elements (34, 53) angularly mutually spaced apart.

5. Apparatus (1) according to claim 4, wherein said cutting elements (34, 53) extend, at least partially, substantially radially with respect to said rotation axis (X).

6. Apparatus (1) according to claim 4, or 5, wherein said cutting elements (34, 53) comprise rectilinear cutting profiles (35, 54) and/or curvilinear cutting profiles (36, 55).

7. Apparatus (1) according to any one of claims 4 to 6, wherein said cutting elements (34, 53) are angularly mutually spaced apart.

8. Apparatus (1) according to any preceding claim, wherein said cutting device (13) comprises rotor means (42) for rotating said cutting means (33).

9. Apparatus (1) according to claim 8, wherein said rotor means (42) is connected to a face of said cutting means (33) opposite a further face of said cutting means (33) facing said further cutting means (52).

10. Apparatus (1) according to claim 8, or 9, wherein said cutting device (13) comprises housing means (20) for housing said cutting means (33), said further cutting means (52) and said rotor means (42).

11. Apparatus (1) according to claim 10, wherein said housing means (20) comprises first hole means (60) to enable an operating fluid (64), in particular pressurised air, to flow inside said housing means (20) for rotating said rotor means (42).

12. Apparatus (1) according to claim 11, wherein said housing means (20) comprises further hole means (63) to enable said fluid (64) to exit said housing means (20).

13. Apparatus (1) according to claim 12, wherein said cutting device (13) comprises silencer means fixable to said further hole means (63) to reduce a noise produced by the exit of said fluid (64) from said housing means (20).

14. Apparatus (1) according to any one of claims 1 to 10, and comprising electric motor means for rotating said cutting means (33).

15. Apparatus (1) according to any one of claims 10 to 14, wherein said cutting device (13) comprises conveying means (23), received in and supported by said housing means (20), for conveying said chips (2) to said cutting means (33).

16. Apparatus (1) according to any preceding claim, wherein said suction conduit means (6, 11) comprises a suction hood (6) that is connectable at an end portion thereof to said cutting device (13), said suction hood (6) being positioned upstream of said cutting device (13) with respect to said suction direction (A).

17. Edge-banding machine for edge-banding panels (3) comprising an apparatus (1) for removing machining chips (2) made of plastics or similar materials as claimed in any preceding claim.

## Patentansprüche

1. Vorrichtung (1) zum Entfernen von Bearbeitungs-Spänen (2), die aus Kunststoff oder ähnlichen Materialien hergestellt sind, umfassend ein Saug-Leitungs-Mittel (6, 11) umfassend einen Einlass (9) und einen Auslass (12) für die Späne (2) und angeordnet zum Ansaugen der Späne (2) zwischen dem Einlass (9) und dem Auslass (12) entlang einer Saugrichtung (A), wobei eine Schneidvorrichtung (13) zum Schneiden der Späne (2) vorgesehen ist, die zwischen dem Einlass (9) und dem Auslass (12) angeordnet ist, wobei die Schneidvorrichtung (13) ein Schneidmittel (33) umfasst und drehbar um eine Rotationsachse (X) im Wesentlichen parallel zu der Saugrichtung (A) gelagert ist, **dadurch gekennzeichnet, dass** die Schneidvorrichtung (13) ein weiteres Schneidmittel (52) umfasst, das mit dem Schneidmittel (33) zum Schneiden der Späne (2) zusammenwirkt.

2. Vorrichtung (1) gemäß Anspruch 1, bei der das weitere Schneidmittel (52) in Bezug auf die Rotationsachse (X) fixiert ist.

3. Vorrichtung (1) gemäß Anspruch 1 oder 2, bei der das weitere Schneidmittel (52) dem Schneidmittel (33) gegenüberliegt.

4. Vorrichtung (1) gemäß einem der vorstehenden Ansprüche, bei der sowohl das Schneidmittel (33) als auch das weitere Schneidmittel (52) jeweils mehrere Schneidelemente (34, 53) umfassen, die winkelig beidseitig voneinander beabstandet sind.

5. Vorrichtung (1) gemäß Anspruch 4, bei der sich die Schneidelemente (34, 53) wenigstens teilweise im Wesentlichen radial bezüglich der Rotationsachse (X) erstrecken.

6. Vorrichtung (1) gemäß Anspruch 4 oder 5, bei der die Schneidelemente (34, 53) gradlinige Schneidprofile (35, 54) und/oder kurvenförmige Schneidprofile (36, 55) umfassen.

7. Vorrichtung (1) gemäß einem der Ansprüche 4 bis 6, bei der die Schneidelemente (34, 53) jeweils winkelig beidseitig voneinander beabstandet sind.

8. Vorrichtung (1) gemäß einem der vorstehenden Ansprüche, bei der die Schneidvorrichtung (13) ein Rotor-Mittel (42) zum Drehen des Schneidmittels (33) umfasst.

9. Vorrichtung (1) gemäß Anspruch 8, bei der das Rotor-Mittel (42) mit einer Seite von dem Schneidmittel (33) verbunden ist, gegenüberliegend einer weiteren Seite des Schneidmittels (33), die dem weiteren Schneidmittel (52) zugewandt ist.

10. Vorrichtung (1) gemäß Anspruch 8 oder 9, bei der die Schneidvorrichtung (13) ein Gehäusemittel (20) zum Aufnehmen des Schneidmittels (33) des weiteren Schneidmittels (52) und des Rotor-Mittels (42) umfasst.

11. Vorrichtung (1) gemäß Anspruch 10, bei der das Gehäusemittel (20) ein erstes Öffnungs-Mittel (60) umfasst, um es einem Betriebs-Fluid (64), insbesondere unter Druck stehende Luft, zu ermöglichen, in das Innere des Gehäusemittels (20) zu fließen, um das Rotor-Mittel (42) zu drehen.

12. Vorrichtung (1) gemäß Anspruch 11, bei der das Gehäusemittel (20) ein weiteres Öffnungs-Mittel (63) umfasst, um es dem Fluid (64) zu ermöglichen, das Gehäusemittel (20) zu verlassen.

13. Vorrichtung (1) gemäß Anspruch 12, bei der die Schneidvorrichtung (13) ein Dämpfer-Mittel umfasst, das an dem weiteren Öffnungs-Mittel (63) fixierbar ist, um Lärm zu reduzieren, der über den Austritt des Fluids (64) aus dem Gehäusemittel (20) erzeugt wird.

14. Vorrichtung (1) gemäß einem der Ansprüche 1 bis 10, und weiter umfassend ein elektrisches Antriebs-Mittel zum Drehen des Schneidemittels (33).

15. Vorrichtung (1) gemäß einem der Ansprüche 10 bis 14, bei der die Schneidvorrichtung (13) ein Förder-Mittel (23) umfasst, das in dem Gehäusemittel (20) aufgenommen und gelagert ist, zum Fördern der Späne (2) zu dem Schneidemittel (33).

16. Vorrichtung (1) gemäß einem der vorstehenden Ansprüche, bei der das Saug-Leitungs-Mittel (6, 11) eine Saug-Haube (6) umfasst, die an einem Endbereich davon mit der Schneidvorrichtung (13) verbindbar ist, wobei die Saug-Haube (6) stromaufwärts von der Schneidvorrichtung (13) bezüglich der Saug-Richtung (A) angeordnet ist.

17. Kantenanleimmaschine zum Kantenanleimen von Panelen (3) umfassend eine Vorrichtung (1) zum Entfernen von Bearbeitungs-Spänen (2), die aus Kunststoff oder ähnlichen Materialien hergestellt sind, wie sie in einem der vorstehenden Ansprüche beansprucht ist.

## Revendications

1. Dispositif (1) pour évacuer des copeaux d'usinage (2) en matière plastique ou matériaux similaires, comprenant des moyens de conduit d'aspiration (6, 11) pourvus d'une entrée (9) et d'une sortie (12) pour lesdits copeaux (2), et agencés pour aspirer lesdits copeaux (2) entre ladite entrée (9) et ladite sortie (12) le long d'une direction (A) d'aspiration, dans lequel est présent un dispositif coupant (13) pour découper lesdits copeaux (2), interposé entre ladite entrée (9) et ladite sortie (12), ledit dispositif coupant (13) comprenant, et supportant de manière rotative autour d'un axe de rotation (X) sensiblement parallèle à ladite direction (A) d'aspiration, des moyens coupants (33), ***caractérisé en ce que*** ledit dispositif coupant (13) comprend d'autres moyens coupants (52) coopérant avec lesdits moyens moyens coupants (33) pour découper lesdits copeaux (2).

2. Dispositif (1) selon la revendication 1, dans lequel lesdits autres moyens coupants (52) sont fixes par rapport audit axe de rotation (X).

3. Dispositif (1) selon la revendication 1 ou 2, dans lequel lesdits autres moyens coupants (52) font face auxdits moyens coupants (33).

4. Dispositif (1) selon l'une quelconque des revendications précédentes, dans lequel lesdits moyens coupants (33) et lesdits autres moyens coupants (52) comprennent chacun une pluralité d'éléments coupants (34, 53) espacés angulairement les uns par rapport aux autres.

5. Dispositif (1) selon la revendication 4, dans lequel lesdits éléments coupants (34, 53) s'étendent, au moins en partie, de manière sensiblement radiale par rapport audit axe de rotation (X).

6. Dispositif (1) selon la revendication 4 ou 5, dans lequel lesdits éléments coupants (34, 53) comprennent des profils coupants rectilignes (35, 54) et/ou des profils coupants curvilignes (36, 55).

7. Dispositif (1) selon l'une quelconque des revendications 4 à 6, dans lequel lesdits autres éléments coupants (34, 53) sont espacés angulairement les uns par rapport aux autres.

8. Dispositif (1) selon l'une quelconque des revendications précédentes, dans lequel ledit dispositif coupant (13) comprend des moyens de rotor (42) pour entraîner en rotation lesdits moyens coupants (33).

9. Dispositif (1) selon la revendication 8, dans lequel lesdits moyens de rotor (42) sont reliés à une face desdits moyens coupants (33) opposée à une autre face desdits moyens coupants (33) faisant face auxdits autres moyens coupants (52).

10. Dispositif (1) selon la revendication 8 ou 9, dans lequel lesdits moyens coupants (13) comprennent des moyens de logement (20) destinés à abriter lesdits moyens coupants (33), lesdits autres moyens coupant (52) et lesdits moyens de rotor (42).

11. Dispositif (1) selon la revendication 10, dans lequel lesdits moyens de logement (20) comprennent des premiers moyens de cavité (60) pour permettre à un fluide de service (64), en particulier de l'air sous pression, de s'écouler à l'intérieur desdits moyens de logement (20) afin d'entraîner en rotation lesdits moyens de rotor (42).

12. Dispositif (1) selon la revendication 11, dans lequel lesdits moyens de logement (20) comprennent d'autres moyens de cavité (63) pour permettre audit fluide (64) de ressortir desdits moyens de logement (20).

13. Dispositif (1) selon la revendication 12, dans lequel ledit dispositif coupant (13) comprend des moyens de silencieux pouvant être fixés auxdits autres moyens de cavité (63) afin de réduire un bruit produit par la sortie dudit fluide (64) hors desdits moyens de logement (20).

14. Dispositif (1) selon l'une quelconque des revendications 1 à 10, et comprenant des moyens de moteur électrique pour entraîner en rotation lesdits moyens coupants (33).

15. Dispositif (1) selon l'une quelconque des revendications 10 à 14, dans lequel ledit dispositif coupant (13) comprend des moyens transporteurs (23), reçus dans lesdits moyens de logement (20), et supportés par eux, pour l'acheminement desdits copeaux (2) jusqu'auxdits moyens coupants (33).

16. Dispositif (1) selon l'une quelconque des revendications précédentes, dans lequel lesdits moyens de conduit d'aspiration (6, 11) comprennent un bras d'aspiration (6) qui peut être raccordé au niveau d'une partie d'extrémité audit dispositif coupant (13), ledit bras d'aspiration (6) étant positionné en amont dudit dispositif coupant (13) par rapport à ladite direction d'aspiration (A).

17. Machine de placage de chants pour l'application de chants sur des panneaux (3), comprenant un dispositif (1) destiné à évacuer les copeaux d'usinage (2) en matière plastique ou matériaux similaires, selon l'une quelconque des revendications précédentes.
